# EUROPÄISCHE PATENTANMELDUNG

(11) **EP 0 698 693 A1**
(43) Veröffentlichungstag der Anmeldung: **28.02.1996**
(21) Anmeldenummer: 95111480.0
(22) Anmeldetag: 21.07.1995
(51) Int. Cl.: E03C 1/02, F16L 41/03

(54) **Anschlusssystem für sanitäre Einrichtungen**

(30) Priorität: 04.08.1994 DE 4427590
(71) Anmelder: Rosenberg, Gerhard, D-57439 Attendorn (DE)
(72) Erfinder: Rosenberg, Gerhard, D-57439 Attendorn (DE)
(74) Vertreter: Pürckhauer, Rolf, Dipl.-Ing.

(57) **Zusammenfassung**

Das Anschlußsystem für sanitäre Einrichtungen wie beispielsweise ein Waschbecken (1), eine Dusche (2), eine Badewanne (3) und eine Toilette (4) in einem Badezimmer (5) verwendet Rohrverteiler (6) aus Kunststoff, wobei jeder Zapfstelle ein Rohrverteiler (6) zugeordnet ist.

Die Rohrverteiler (6) sind in eine umlaufende Warmwasserleitung (7) aus Kunststoff eines an einen Heizkessel (8) oder einen Warmwasserspeicher angeschlossenen Warmwasserkreislaufes (9) und in eine Kaltwasserleitung (10) eingebaut, die an die vom Versorgungsnetz in das Wohngebäude mit dem Badezimmer (5) abzweigende Zuführleitung (11) angebunden ist. Von den einzelnen Rohrverteilern (6) führen Anschlußrohre (12) aus Kunststoff zu den Waschbecken (1), der Dusche (2), der Badewanne (3) und der Toilette (4).

## Beschreibung

Die Erfindung betrifft ein Anschlußsystem für sanitäre Einrichtungen.

Die Warmwasseranschlüsse von sanitären Einrichtungen in Badezimmern wie Waschbecken, Duschen, Badewannen und Bidets werden üblicherweise über Verteiler an einen Heizkessel oder einen Warmwasserspeicher angeschlossen, und die Kaltwasseranschlüsse der sanitären Einrichtungen werden über Verteiler an die vom Versorgungsnetz in das jeweilige Gebäude abzweigende Zuführleitung angebunden.

Als Anschlußrohre werden Rohre aus Metall oder Kunststoff, vorwiegend biegsame Kunststoffrohre, die von der Rolle abgezogen werden, verwendet, wobei die Rohre vom Verteiler über den Fußboden zu den einzelnen Zapfstellen verlegt werden. Die Anschlußrohre werden entweder in die auf den Boden aufgebrachte Wärme- und Trittschalldämmung oder auf der Dämmung verlegt und dann vom Estrich abgedeckt, auf dem ein Bodenbelag, vorwiegend Fliesen verlegt werden.

Der entscheidende Nachteil dieses bekannten Anschlußsystems ist in dem erforderlichen großen Aufwand an Rohrmaterial zu sehen, der dadurch bedingt ist, daß von einem Verteiler zu jeder Zapfstelle ein Anschlußrohr verlegt werden muß.

Der Erfindung liegt die Aufgabe zugrunde, ein Anschlußsystem für sanitäre Einrichtungen zu entwickeln, das gegenüber dem bekannten System eine technische Vereinfachung im Hinblick auf eine Verringerung des benötigten Rohrmaterials, eine einfachere und schnellere Montage und einen höheren Vorfertigungsgrad bietet.

Diese Aufgabe ist erfindungsgemäß gelöst durch ein Anschlußsystem für sanitäre Einrichtungen mit den Merkmalen des Patentanspruchs 1.

Gegenstand der Unteransprüche sind vorteilhafte und zweckmäßige Ausgestaltungen des erfindungsgemäßen Anschlußsystems.

Das neue Anschlußsystem zeichnet sich dadurch aus, die gestellte Aufgabe auf einfache und zweckmäßige Weise zu lösen.

Die Erfindung ist nachstehend anhand von Zeichnungen erläutert. Es zeigt
- Fig. 1: ein Schema des neuen Anschlußsystems für sanitäre Einrichtungen,
- Fig. 2: eine Draufsicht eines Rohrverteilers,
- Fig. 3: einen Querschnitt des Verteilers nach Linie III-III der Fig. 2 und
- Fig. 4: einen Längsschnitt des Verteilers nach Linie IV-IV der Fig. 3.

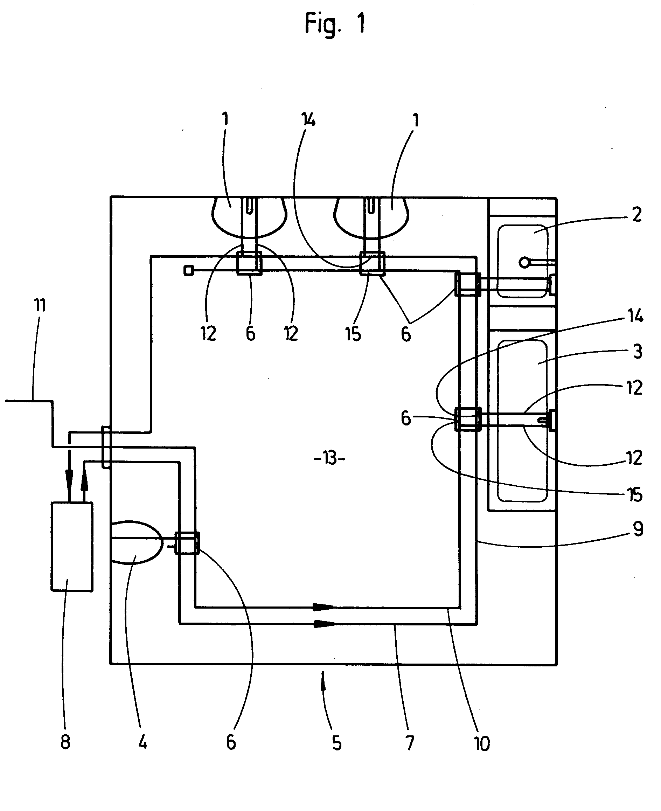

Das Anschlußsystem nach Fig. 1 für sanitäre Einrichtungen wie beispielsweise zwei Waschbecken 1, eine Dusche 2, eine Badewanne 3 und eine Toilette 4 in einem Badezimmer 5 verwendet Rohrverteiler 6 aus Kunststoff, wobei jeder Zapfstelle ein Rohrverteiler 6 zugeordnet ist.

Die Rohrverteiler 6 sind in eine umlaufende Warmwasserleitung 7 aus Kunststoff eines an einen Heizkessel 8 oder einen Warmwasserspeicher angeschlossenen Warmwasserkreislaufes 9 und in eine Kaltwasserleitung 10 eingebaut, die an die vom Versorgungsnetz in das Wohngebäude mit dem Badezimmer 5 abzweigende Zuführleitung 11 angebunden ist. Von den einzelnen Rohrverteilern 6 führen Anschlußrohre 12 aus Kunststoff zu den Waschbecken 1, der Dusche 2, der Badewanne 3 und der Toilette 4.

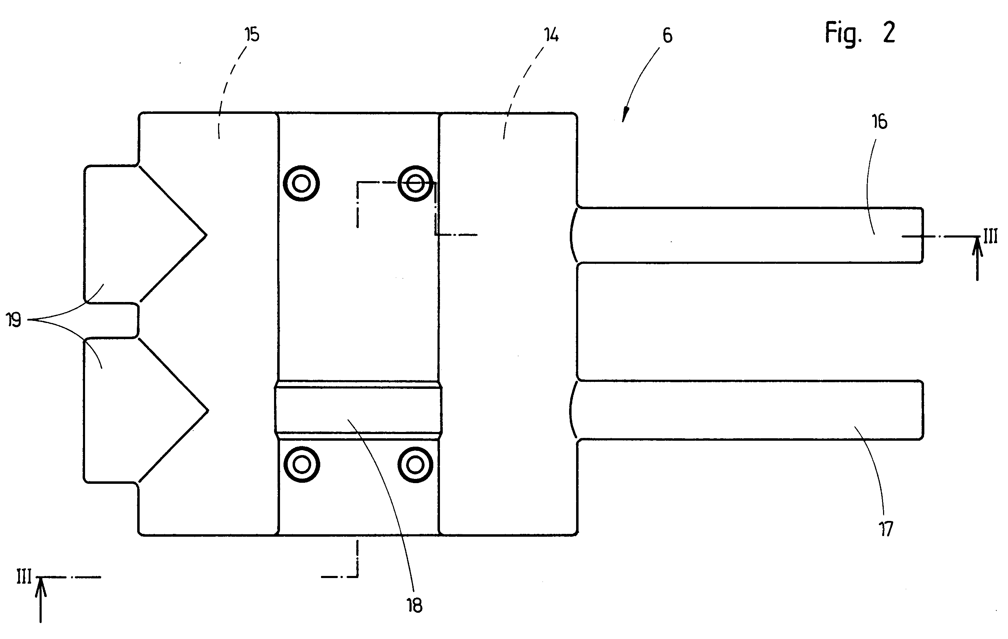

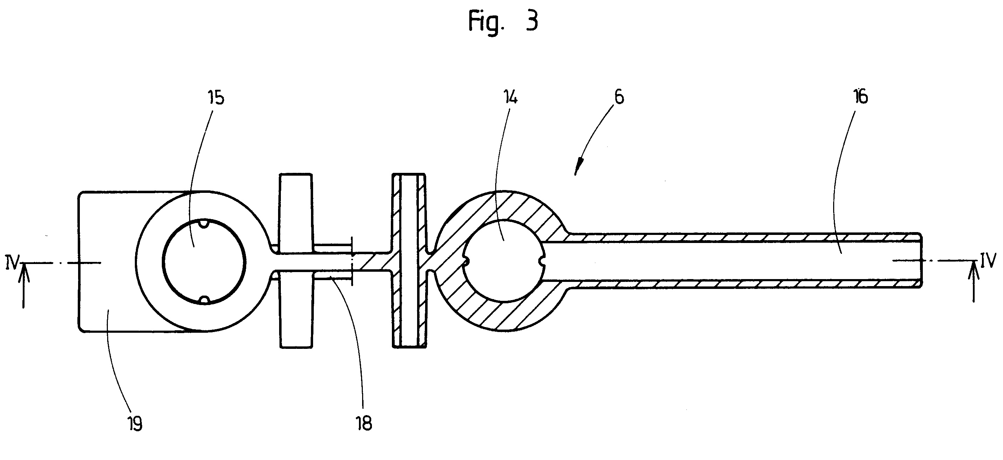

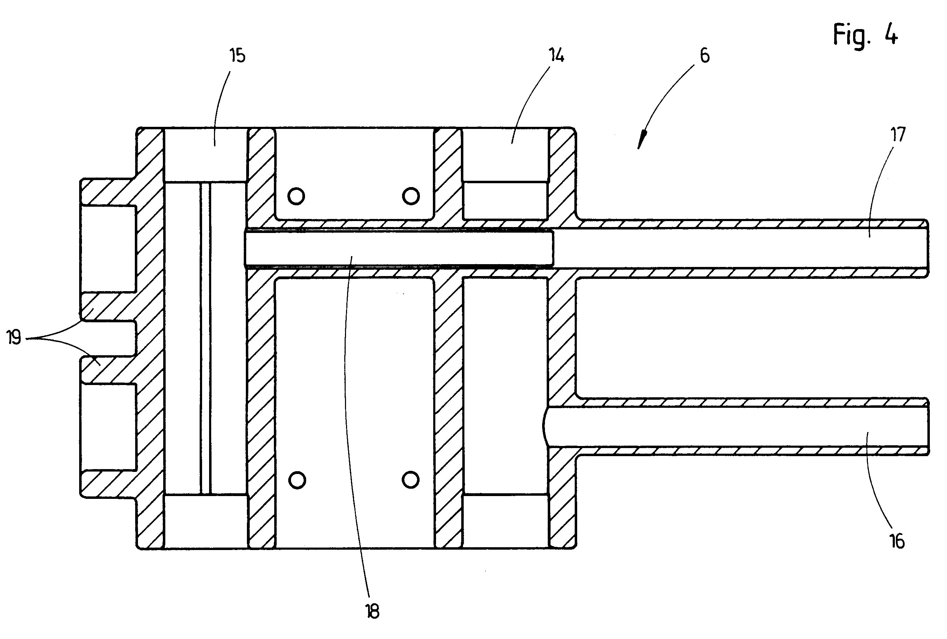

Die in den Fign. 2 bis 4 dargestellten Rohrverteiler 6 werden auf einem Betonboden 13 befestigt und in eine Wärme- und Trittschalldämmung verlegt, auf die ein Estrich aufgebracht wird, auf dem Fliesen verlegt werden.

Die Rohrverteiler 6 weisen zwei parallele Durchgangskanäle 14, 15 zum Anschluß an die Warmwasserleitung 7 und die Kaltwasserleitung 10 sowie zwei quer zu den Durchgangskanälen 14, 15 verlaufende Anschlußrohre 16, 17 auf, deren eines 16 von dem ersten Durchgangskanal 14 abzweigt und deren anderes 17 über einen durch den ersten Durchgangskanal 14 geführten Verbindungskanal 18 an den zweiten Durchgangskanal 15 angeschlossen ist.

Die Rohrverteiler 6 sind mit zwei zusätzlichen Anschlußstutzen 19 ausgestattet, die an der den Anschlußrohren 16, 17 gegenüberliegenden Seite der Rohrverteiler 6 an den zweiten Durchgangskanal 15 quergerichtet angrenzen.

Die Anschlußstutzen 19 der Rohrverteiler 6 können bei Bedarf zum Anschluß von Verbindungsrohren zu dem Durchgangskanal 15 durchgebohrt werden.

## Patentansprüche

1. Anschlußsystem für sanitäre Einrichtungen, gekennzeichnet durch den einzelnen sanitären Einrichtungen wie Waschbecken (1), Duschen (2), Badewannen (3) und Toiletten (4) zugeordnete, auf dem Boden (13) oder an der Wand zu befestigende Rohrverteiler (6) aus Kunststoff mit zwei parallelen Durchgangskanälen (14, 15) zum Anschluß an eine Warmwasserleitung (7) und eine Kaltwasserleitung (10) und mit zwei quer zu den Durchgangskanälen (14, 15) verlaufenden äußeren Anschlußrohren (16, 17), deren eines (16) von dem ersten Durchgangskanal (14) abzweigt und deren anderes (17) über einen durch den ersten Durchgangskanal (14) geführten Verbindungskanal (18) an den zweiten Durchgangskanal (15) angeschlossen ist.

2. Anschlußsystem nach Anspruch 1, gekennzeichnet durch zusätzliche aufbohrbare Anschlußstutzen (19), die an der den Anschlußrohren (16, 17) gegenüberliegenden Seite der Rohrverteiler (6) an den einen Durchgangskanal (15) quergerichtet angrenzen.

3. Anschlußsystem nach Anspruch 1 und 2, gekennzeichnet durch den Einbau der Rohrverteiler (6) in einen an einen Heizkessel (8) oder einen Warmwasserspeicher angeschlossenen Warmwasserkreislauf (9).
